## Europäisches Patentamt

## European Patent Office

## Office européen des brevets

(19)

(11) Veröffentlichungsnummer: **0 103 289**
**A2**

# EUROPÄISCHE PATENTANMELDUNG

(12)

(21) Anmeldenummer: **83108934.7**

(22) Anmeldetag: **09.09.83**

(51) Int. Cl.³: **G 02 B 7/26**

(30) Priorität: **13.09.82 DE 8225781 U**

(43) Veröffentlichungstag der Anmeldung: **21.03.84**
**Patentblatt 84/12**

(84) Benannte Vertragsstaaten: **CH DE FR GB LI**

(71) Anmelder: **SIEMENS AKTIENGESELLSCHAFT, Berlin und München Wittelsbacherplatz 2, D-8000 München 2 (DE)**

(72) Erfinder: **Schön, Josef, Dipl.-Ing., Schlesische Strasse 2, D-8192 Geretsried (DE)**

(54) **Führungshülse für Lichtwellenleitersteckvorrichtungen.**

(57)   In einem hohlzylindrischen Mündungsabschnitt (14) einer zur Aufnahme zumindest eines Steckerstiftes (7) einer Lichtwellenleitersteckvorrichtung vorgesehenen Führungshülse (1) ist eine aus Teflon bestehende Gleithülse (13) angeordnet, deren lichte Weite zum Inneren der Führungshülse (1) hin auf den Außendurchmesser des Steckerstiftes (7) konisch vermindert ist. Zwischen Mündungsabschnitt (14) und Hülseninnerem (3) ist die Führungshülse (1) mit einem konischen Übergangsabschnitt (11) versehen, in den die Gleithülse (13) mit ihrem inneren Randbereich geringfügig elastisch ausweichen kann. Die Gleithülse wirkt dadurch als elastische Fang- und Leitvorrichtung für den Steckerstift (7), um diesen reibungsarm dem Inneren (3) der Führungshülse (1) zuzuführen und als Reinigungsgerät, um die Verschleppung von Staub oder dergleichen ins Innere der Führungshülse zu verhindern.

SIEMENS AKTIENGESELLSCHAFT          Unser Zeichen
Berlin und München                 VPA 82 P 1 7 6 7 E

Führungshülse für Lichtwellenleitersteckvorrichtungen

Die Erfindung bezieht sich auf eine zumindest auf einer Seite mit einer Einsteckmündung für einen stiftförmigen Körper versehene Führungshülse einer Lichtwellenleitersteckvorrichtung, wobei die Führungshülse einen dem Außendurchmesser des stiftförmigen Körpers angepaßten hohlzylindrischen Aufnahmeraum aufweist.

Eine solche Führungshülse ist z.B. aus der DE-OS 25 16 858 bekannt. Die dort als Paßhülse bezeichnete Führungshülse bildet mit ihrem hohlzylindrischen Innenraum ein Justierelement für zwei Steckerstifte, in denen genau auf den Außenmantel der Steckerstifte zentriert Endabschnitte von Lichtwellenleitern fixiert sind. Dadurch, daß der hohlzylindrische Innenraum der Führungshülse möglichst genau auf den Außendurchmesser der Steckerstifte abgestimmt ist, treffen die Stirnseiten der beiden Lichtwellenleiterendabschnitte beim Einstecken der Steckerstifte in die Führungshülse von deren beiden Seiten her, genau aufeinander, wobei die Achsen der beiden Lichtwellenleiterendabschnitte miteinander zur Deckung gebracht werden und somit eine verlustarme Verbindung zwischen zwei Lichtwellenleiterabschnitten gebildet werden kann.

Es ist klar, daß eine solche Lichtwellenleitersteckvorrichtung umso verlustärmer ist, je geringer die lichte Weite der Führungshülse vom Außendurchmesser der Steckerstifte abweicht.

Rt 1 Obh / 9.9.1982

Dies erfordert also eine nahezu spielfreie Ausbildung der Passung zwischen Hülse und Steckerstiften.

Beim Einführen der Steckerstifte in die Hülse wird aber häufig auf dem Außenmantel der Steckerstifte abgelagerter Staub ins Hülseninnere transportiert, der einen Stift in der Hülse verklemmen, und bei einem Trennen der Stifte von der Hülse unter größerem Kraftaufwand die präzisen Oberflächen von Stift und Hülse beschädigen kann.

Aufgabe vorliegender Erfindung ist es daher, eine Führungshülse der eingangs genannten Art derart auszubilden, daß die Betriebsfähigkeit einer Lichtwellenleitersteckvorrichtung, bei der zumindest ein Steckerstift in eine Führungshülse eingesteckt wird, möglichst lange, d.h. auch bei einer relativ großen Zahl von Steckvorgängen, aufrechterhalten werden kann.

Erfindungsgemäß ergibt sich die Lösung dieser Aufgabe dadurch, daß die Führungshülse vor dem Aufnahmeraum mit einem zum Aufnahmeraum koaxialen hohlzylindrischen Mündungsabschnitt mit gegenüber dem Aufnahmeraum vergrößerter lichten Weite versehen ist, und daß in diesem Mündungsabschnitt eine aus Tetrafluoräthylen oder ähnlichem Material bestehende Gleithülse mit konisch zum Aufnahmeraum hin verringertem Innendurchmesser angeordnet ist.

Häufiger betätigte Lichtwellenleitersteckvorrichtungen kommen vor allem in der Einschubtechnik zum Einsatz. Beim Herausziehen von Gestelleinschüben zum Zwecke der Wartung oder Reparatur von im Einschub angeordneten Schaltungsteilen erfolgt nämlich jedesmal eine Trennung der Steckvorrichtung, die anschließend wieder aufgehoben wird. Dabei gleiten die hochpräzisen Oberflächen der dabei zusammenwirkenden Teile der Steckvorrichtung aufeinander. Vorteilhaft verhindert hier der Gegenstand der Erfindung daß insbesondere beim Einführen des Steckerstiftes in die Führungshülse, Staubkörnchen, die sich auf dem Steckerstift abgelagert haben, eine Art von Schmirgelwirkung auf diese Oberflächen ausüben können, oder sogar den Stift in der Hülse verklemmen. Diese Staubteilchen werden nämlich durch die von der engsten Stelle der Gleithülse gebildete ringförmige und elastische Abstreiflippe am Transport ins Innere der Führungshülse gehindert.

In weiterer Ausgestaltung der Erfindung kann vorgesehen sein, daß zwischen Mündungsabschnitt und Aufnahmeraum ein zum Mündungsschnitt hin sich konisch erweiternder Übergangsabschnitt vorgesehen ist und daß die Gleithülse auf der Seite des Aufnahmeraumes mit einer quer zur Achse der Führungshülse verlaufenden Begrenzungswand versehen ist, und daß die Gleithülse mit der durch ihren Außenmantel und die Begrenzungswand gebildeten Kante in Einsteckrichtung des stiftförmigen Körpers an einer zwischen Mündungsabschnitt und Übergangsabschnitt vorgesehenen Kante der Führungshülse abgestützt ist.

Auf diese Weise wird durch den Übergangsabschnitt vorteilhaft hinter der Gleithülse in Richtung zum Aufnahmeraum der Führungshülse ein Raum geschaffen, in den der innere Rand der Gleithülse, also die Abstreiflippe der Gleithülse elastisch ausweichen kann, wenn der Steckerstift etwas exzentrisch zur Führungshülse in diese eingeführt wird.

Anhand eines in einer Figur dargestellten Ausführungsbeispiels wird der Gegenstand der Erfindung nachfolgend noch näher erläutert.

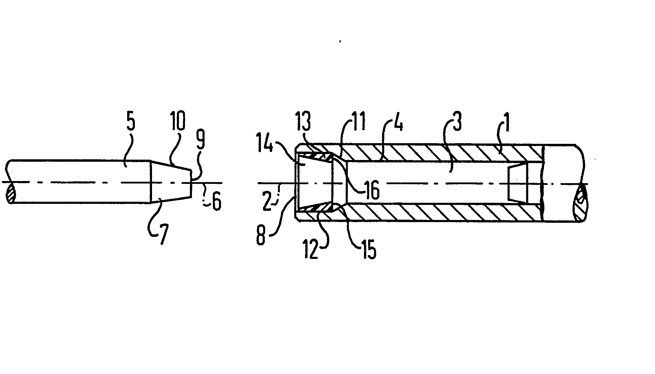

Die Figur zeigt in Seitenansicht und teilweise im Schnitt eine Führungshülse 1 aus Metall, die in ihrem Inneren einen zur Achse 2 der Führungshülse konzentrisch angeordneten hohlzylindrischen Aufnahmeraum 3 aufweist. Die Mantelfläche 4 des Aufnahmeraumes 3 ist mit großer Präzision hergestellt, so daß der Mantel 5 eines Steckerstiftes 7, der konzentrisch zu dessen Achse 6 verläuft und ebenfalls sehr toleranzarm ist, im wesentlichen völlig spielfrei in den Aufnahmeraum 3 der Führungshülse 1 paßt.

Da im Steckerstift 7 ein Lichtwellenleiterendabschnitt genau konzentrisch zur Achse 6 des Steckerstiftes fixiert ist, wird durch das Zusammenfügen von Steckerstift 7 und Führungshülse 1 der im Steckerstift 7 enthaltene Lichtwellenleiterendabschnitt mit seiner Achse genau auf einen weiteren Lichtwellenleiterendabschnitt ausgerichtet, der konzentrisch zur Achse 2 in der Führungshülse 1 auf der von der Mündung 8 der Führungshülse 1 abgewandten Seite des Aufnahmeraumes 3 befestigt ist. Diese Befestigung des weiteren Lichtwellenleiterendabschnittes kann z.B. durch das Einführen eines weiteren Steckerstiftes von der anderen Seite der Führungshülse 1 her in diese vorgenommen werden, wobei der weitere Lichtwellenleiterendabschnitt in diesem weiteren Steckerstift in gleicher Weise fixiert ist, wie der im Steckerstift 7 fixierte Lichtwellenleiterendabschnitt. In diesem Fall kann die Führungshülse 1 auf ihrer, von der Mündung 8 abgewandten Seite vorteilhaft eine der Mündung 8 gleichartige Ausbildung haben.

Um das Einführen des Steckerstiftes 7 in den Aufnahmeraum 3 der Führungshülse 1 zu erleichtern, ist der Steckerstift 7 an seinem, der Hülse 1 zugewandten Ende 9 mit einem konisch sich zum Ende 9 hin verjüngenden Einsteckabschnitt 10 versehen.

Die Führungshülse 1 weist vor dem Aufnahmeraum 3 einen Übergangsabschnitt 11 auf, in dessen Bereich der Durchmesser des Aufnahmeraumes 3 sich zur Mündung 8 der Hülse 1 hin konisch vergrößert.

Zwischen dem Übergangsabschnitt 11 und der Mündung 8 der Hülse 1 ist ein zum Aufnahmeraum 3 koaxialer hohlzylindrischer Mündungsabschnitt 14 vorgesehen, der eine gegenüber dem Aufnahmeraum 3 vergrößerte lichte Weite aufweist.

In diesem Abschnitt 14 ist eine Gleithülse aus Tetrafluoräthylen angeordnet. Die Gleithülse 13 ist so ausgebildet, daß sie mit ihrem zylindrischen Außenmantel 12 der Führungshülse 1 im Mündungsabschnitt 14 anliegt, also einen parallel zur Achse 2 der Führungshülse verlaufenden Außenmantel 12 aufweist. Dagegen verjüngt sich von der Mündung 8 zum Übergangsabschnitt 11 die lichte Weite der Gleithülse 13 konisch bis auf den Durchmesser des Steckerstiftes 7, also auf die lichte Weite des Aufnahmeraumes 3.

Die dem Aufnahmeraum 3 zugewandte Begrenzungswand 15 der Gleithülse 13 verläuft rechtwinkelig zur Achse 2 der Hülse 1. Die Gleithülse 13 bildet dadurch eine keilförmige Kante 16 oder Abstreiflippe, die beim Einschieben des Steckerstiftes 7 in den Aufnahmeraum 3 sich elastisch an den Mantel 5 des Stiftes 7 anschmiegt und dadurch auf diesem abgelagerte Staubteilchen und dergl. abwischt.

Der Übergangsabschnitt 11 der Führungshülse 1 ermöglicht es dabei der Kante 16 in gewissem Umfang elastisch in Richtung zum Aufnahmeraum 3 der Führungshülse 1 auszuweichen.

Auf diese Weise bildet die Gleithülse 13 für den Steckerstift 7 einen elastisch nachgiebigen Leitkörper, der mit dem konischen Abschnitt 10 des Steckerstiftes 7 zusammenwirkt, um den Steckerstift 7 reibungsarm und betriebssicher dem Aufnahmeraum 3 der Führungshülse 1 zuzuleiten, auch wenn der Steckerstift 7 beim Einführen in die Hülse 1
gegenüber der Achse 2 der Hülse 1 einen geringfügigen Achsenversatz aufweist, oder mit seiner Achse 6 gegenüber der
Achse 2 der Hülse 1 geringfügig verkantet ist.

Patentansprüche

1. Zumindest auf einer Seite mit einer Einsteckmündung für einen stiftförmigen Körper versehene Führungshülse einer Lichtwellenleitersteckvorrichtung, wobei die Führungshülse einen dem Außendurchmesser des stiftförmigen Körpers angepaßten hohlzylindrischen Aufnahmeraum aufweist,
dadurch gekennzeichnet, daß die Führungshülse (1) vor dem Aufnahmeraum (3) mit einem zum Aufnahmeraum (3) koaxialen hohlzylindrischen Mündungsabschnitt (14) mit gegenüber dem Aufnahmeraum (3) vergrößerter lichten Weite versehen ist, und daß in diesem Mündungsabschnitt (14) eine aus Tetrafluoräthylen oder ähnlichem Material bestehende Gleithülse (13) mit konisch zum Aufnahmeraum (3) hin verringertem Innendurchmesser angeordnet ist.

2. Führungshülse nach Anspruch 1,
dadurch gekennzeichnet, daß zwischen Mündungsabschnitt (12) und Aufnahmeraum (3) ein zum Mündungsabschnitt (12) hin sich konisch erweiternder Übergangsabschnitt (11) vorgesehen ist, daß die Gleithülse (13) auf der Seite des Aufnahmeraumes (3) mit einer quer zur Achse (2) der Führungshülse (1) verlaufenden Begrenzungswand (15) versehen ist, und daß die Gleithülse (13) mit der durch ihren Außenmantel (12) und die Begrenzungswand (15) gebildeten Kante in Einsteckrichtung des stiftförmigen Körpers (7) an einer zwischen Mündungsabschnitt (14) und Übergangsabschnitt (11) vorgesehenen Kante der Führungshülse (1) abgestützt ist.

0103289

1/1